Europäisches Patentamt

(19) European Patent Office

Office européen des brevets

(11) Numéro de publication: **0 230 836**
**B1**

(12) **FASCICULE DE BREVET EUROPEEN**

(45) Date de publication du fascicule du brevet:
03.10.90

(51) Int. Cl.⁵: **B60C 23/06**, G01B 11/16

(21) Numéro de dépôt: **86402941.8**

(22) Date de dépôt: **26.12.86**

(54) Dispositif pour évaluer la déformation des pneumatiques de véhicules.

(30) Priorité: **30.12.85 FR 8519378**

(43) Date de publication de la demande:
**05.08.87 Bulletin 87/32**

(45) Mention de la délivrance du brevet:
**03.10.90 Bulletin 90/40**

(84) Etats contractants désignés:
**DE FR GB IT**

(56) Documents cités:
**EP-A- 0 046 439**
**FR-A- 2 121 283**
**US-A- 4 355 299**

(73) Titulaire: **INSTITUT NATIONAL DE RECHERCHE SUR LES TRANSPORTS ET LEUR SECURITE, 2 Avenue du Général Malleret-Joinville, F-94114 Arcueil(FR)**

(72) Inventeur: **Clerc, Alain, 38 rue de la Gare, F-94110 Arcueil(FR)**

(74) Mandataire: **Flavenot, Bernard, Société ABRITT 17, rue du Docteur Charcot La Norville, F-91290 Arpajon(FR)**

## Description

La présente invention concerne les dispositifs pour évaluer la déformation des pneumatiques, et plus particulièrement leur déformation radiale, en vue, par exemple, d'en déduire le niveau de leur gonflement ou l'intensité de la force qu'ils ont à supporter.

En effet, la grande majorité des véhicules terrestres se déplacent sur le sol au moyen de roues et ces roues sont constituées en grande majorité par des jantes autour desquelles sont montés des pneumatiques qui sont maintenus en forme par des chambres à air. Pour que celles-ci puissent jouer correctement leur fonction, elles sont gonflées à des pressions déterminées généralement par le constructeur des pneumatiques. Ainsi, quand les pneumatiques sont en bon état et que la pression de gonflage est correcte, le véhicule peut rouler en quasi sécurité. Par contre, quand la pression de gonflage n'est pas bonne, il y a incontestablement un danger qui peut entraîner un accident. C'est ainsi que l'on constate que beaucoup d'utilisateurs ne surveillent pas avec assez de soin, et systématiquement, la pression des pneumatiques de leur véhicule et laissent généralement cette pression à une valeur trop faible.

Pourtant, il existe des systèmes qui permettent de surveiller la pression de ces pneumatiques. Ces systèmes ont été essentiellement basés sur un capteur de pression placé directement au niveau des pneumatiques, et un lecteur de la pression mesurée situé, par exemple, dans le champ de vision du pilote. On comprend que de tels dispositifs, s'ils donnent de bons résultats, présentent incontestablement des inconvénients qui en limitent considérablement leur utilisation en grande série et généralisée sur tous les véhicules. C'est ainsi que l'on trouve de tels systèmes uniquement sur les avions, pour leur sécurité au décollage et à l'atterrissage. En fait, les principales gênes à leur développement sont leur prix et les difficultés de leur réalisation, notamment à cause des moyens de couplage du capteur et de l'afficheur, du fait que le capteur est sur le pneumatique et qu'il tourne avec lui.

Aussi, la présente invention a-t-elle pour but de réaliser un dispositif pour évaluer la déformation des pneumatiques de véhicules pour en déduire notamment la valeur de leur pression de gonflage, qui puisse être facilement utilisé et qui n'ait pas un prix de revient important en lui-même, et encore moins, ramené par pneumatique contrôlé.

Plus précisément, la présente invention a pour objet un dispositif pour évaluer la déformation des pneumatiques de véhicules quand ils roulent sur le sol, caractérisé par le fait qu'il comporte :
- des moyens pour mesurer une première corde desdits pneumatiques, ladite première corde étant suivant une première direction distante d'une première distance dudit sol,
- des moyens pour calculer une longueur théorique d'une seconde corde dudit pneumatique, à une seconde distance du sol, en fonction de la valeur de ladite première corde et de ladite première distance au sol,
- des moyens pour mesurer la valeur de ladite seconde corde dudit pneumatique située à ladite seconde distance du sol, et
- des moyens pour comparer la longueur théorique de ladite seconde corde et la valeur mesurée de ladite seconde corde, et pour élaborer un signal d'information représentatif de ladite comparaison.

D'autres caractéristiques et avantages de la présente invention apparaîtront au cours de la description suivante donnée en regard des dessins annexés à titre illustratif, mais nullement limitatif, dans lesquels
- les Figures 1A et 1B représentent, sous forme schématique, dans deux vues respectivement de face et de dessus, une partie d'un mode de réalisation d'un dispositif selon l'invention,
- la Figure 2 représente un mode de réalisation d'une autre partie d'un dispositif selon l'invention, complémentaire de celle selon les Figures 1A et 1B,
- la Figure 3 représente, sous forme schématique, l'illustration d'un premier perfectionnement au mode de réalisation selon les Figures 1 et 2,
- la Figure 4 représente, sous forme schématique, l'illustration d'un second perfectionnement du mode de réalisation selon les Figures 1 à 3,
- la Figure 5 représente, sous forme schématique, un mode de réalisation d'un dispositif, dans le cas d'une application, et
- la Figure 6 représente un perfectionnement du mode de réalisation des dispositifs selon les Figures 1 à 4.

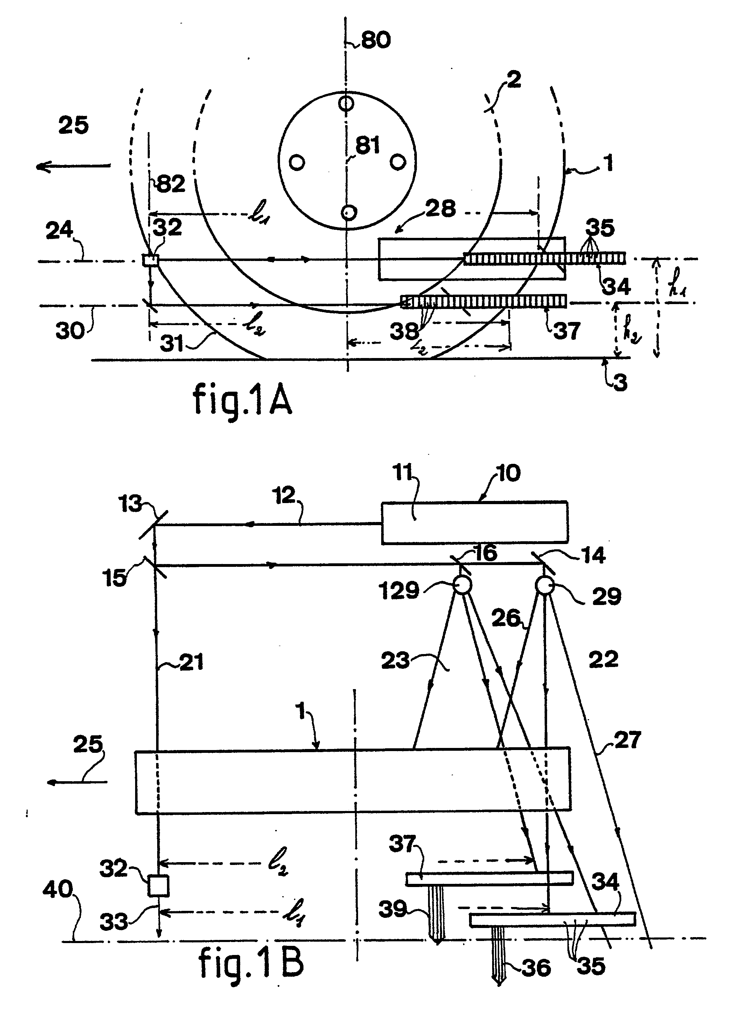

Les Figures 1A et 1B représentent une partie du dispositif permettant d'évaluer la déformation d'un pneumatique 1 monté par exemple sur une jante 2. Généralement, le pneumatique est maintenu en forme sous l'action d'une pression de gonflage d'une chambre à air disposée entre la jante et le pneumatique. Il existe d'ailleurs aussi des réalisations qui font que le pneumatique et la jante forment à eux seuls la chambre à air. La jante est, elle, généralement montée sur un arbre qui est couplé à un moteur et au chassis pour permettre au véhicule de se déplacer sur un sol 3. Pour les véhicules, par exemple automobiles, les fabricants de pneumatiques déterminent avec beaucoup de soin la valeur optimale de la pression de gonflage de ces pneumatiques, pour la sécurité de roulement, notamment à grande vitesse.

La partie du dispositif illustré sur les Figures 1A et 1B comprend un générateur 10 de faisceau lumineux fin et parallèle 12 comme, par exemple, un faisceau lumineux émis par un générateur laser du type Hélium-Néon. Ce faisceau 12 émergent est décomposé en au moins trois faisceaux lumineux 21, 22 et 23, au moyen d'un ensemble d'éléments réfléchissants et semi-réfléchissants 13, 14, 15, 16 ... comme, par exemple, des miroirs, des prismes à réflexion totale ou partielle, etc.

2

Les deux premiers faisceaux 21 et 22 sont tous deux situés dans un premier plan 24 sensiblement parallèle à celui du sol 3, et à une distance $h_1$ de ce sol. Le premier faisceau 21 est un faisceau fin et parallèle, contenu dans ce plan et a, dans ce mode de réalisation, une direction qui est sensiblement perpendiculaire au sens du déplacement 25 du pneumatique 1. Le deuxième faisceau 22, contenu aussi dans le premier plan 24, est un faisceau en pinceau plan divergent. Le faisceau 22 est positionné à une certaine distance du premier faisceau 21 pour que les deux distances séparant le faisceau 21 des deux faisceaux 26 et 27 bordant le faisceau en pinceau 22 soient respectivement inférieures ou supérieures aux cordes 28 des pneumatiques 1 définies à une hauteur $h_2$ du sol et dans un plan parallèle à ce sol.

Le troisième faisceau 23 est aussi un faisceau en pinceau plan divergent et disposé de façon qu'il soit dans un deuxième plan 30, parallèle au plan du sol 3, et à une distance $h_2$ de celui-ci inférieure à $h_1$, par exemple égale sensiblement à la moitié de $h_1$, mais avantageusement le plus près possible du sol.

De plus, ce troisième faisceau 23 est positionné pour rencontrer le bord 31 de la circonférence du pneumatique ayant pour corde la corde 28 définie ci-dessus.

Le dispositif comprend, en plus, sur chaque trajet des trois faisceaux 21, 22 et 23, au-delà du trajet 25 du pneumatique, des détecteurs photosensibles. Un premier détecteur 32 est constitué par une cellule disposée sur le trajet du faisceau 21 et est apte à délivrer à sa sortie 33 un signal du type électrique pouvant prendre deux états "1" ou "0", suivant que la cellule reçoit ou non le faisceau 21.

Un deuxième détecteur 34 constitué par une barrette d'une pluralité de cellules photosensibles 35 juxtaposées les unes aux autres est situé dans le plan 24 et sur une longueur qui est sensiblement égale à largeur du faisceau 22 au niveau où est positionnée cette barrette 34. Cette barrette 34 de cellules 35 comporte une pluralité de sorties 36 qui sont aptes à délivrer des signaux à deux états "1" ou "0", suivant que chaque cellule 35 reçoit ou non de la lumière du faisceau 22.

Enfin, un troisième détecteur 37 constitué comme le détecteur 34 d'une barrette d'une pluralité de cellules photosensibles 38 est disposé sur le trajet du faisceau 23 et sur une longueur sensiblement égale à la largeur du faisceau à l'endroit où est disposée cette barrette 37, celle-ci comportant une pluralité de sorties 39 qui sont aptes à délivrer des signaux "1" ou "0" définis comme précédemment.

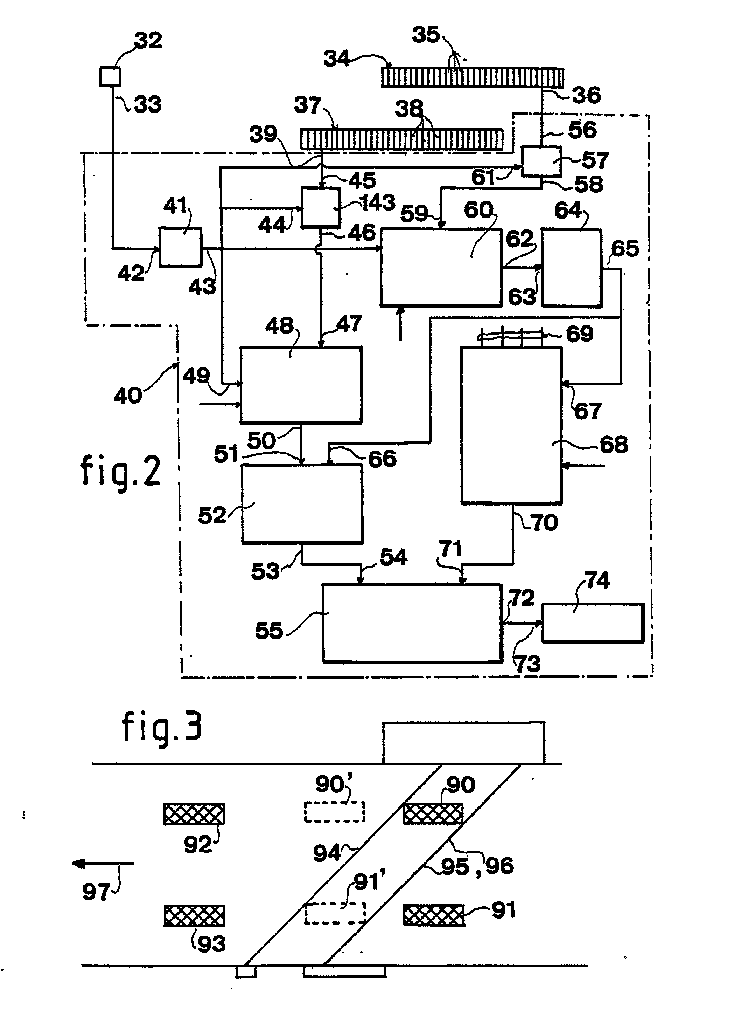

Ces trois sorties 33, 36 et 39 de ces détecteurs sont connectées à un ensemble électronique 40 de traitement des signaux délivrés sur ces sorties, un exemple d'un mode de réalisation de cet ensemble électronique 40 étant représenté sur la Figure 2.

Cet ensemble 40 comprend une bascule 41 dont l'entrée 42 est reliée à la sortie 33 du détecteur 32. La sortie 43 de cette bascule 41 est connectée à l'entrée 44 d'une porte logique 143 dont une autre entrée 45 est reliée à la sortie 39 de la barrette 37 de cellules 38. La sortie 46 de la porte 143 est reliée à l'entrée 47 d'une mémoire tampon 48 dont l'entrée de commande 49 est reliée à la sortie 43 de la bascule 41. La sortie 50 de la mémoire tampon 48 est reliée à l'entrée 51 d'un soustracteur 52 dont la sortie 53 est reliée à une première entrée 54 d'un comparateur 55.

Les sorties 36 de la première barrette 34 de cellules 35 sont reliées à l'entrée 56 d'une porte logique 57 dont la sortie 58 est reliée à une entrée de mise en mémoire 59 d'une mémoire tampon 60 commandable. L'entrée de commande 61 de la porte logique 57 est reliée à la sortie 43 de la bascule 41.

La sortie 62 de la mémoire tampon 60 est relieé à l'entrée 63 d'un diviseur 64. La sortie 65 du diviseur 64 est reliée, d'une part à la deuxième entrée 66 du soustracteur 52, et d'autre part à l'entrée 67 d'un calculateur 68 comportant des entrées 69 d'alimentation des différentes valeurs de paramètres de calcul nécessaires. La sortie 70 de résultat du calculateur 68 est reliée à la deuxième entrée 71 du comparateur 55. La sortie 72 de comparateur 55 est reliée à l'entrée 73 d'un afficheur 74, par exemple du type à diodes électro-luminescentes.

Le dispositif ainsi décrit ci-dessus en regard des Figures 1 et 2 fonctionne de la façon suivante :

On suppose que la roue roule sur le sol 3 dans le sens indiqué par la flèche 25. Quand le pneumatique prend la position, même instantanée, comme illustré sur la Figure 1A, il interrompt la propagation du faisceau lumineux vers la cellule 32. Dans ce cas, la cellule 32 délivre à sa sortie 33 un signal qui passe d'un état à un autre, par exemple de "1" à "0" logique. Ce changement d'état de la bascule 41 permet à celle-ci de délivrer à sa sortie 43 une impulsion calibrée courte qui commande, dans ce cas, l'ouverture des portes logiques 143 et 57. Ainsi, les signaux délivrés aux sorties 39 et 36 respectivement des barrettes 37 et 34 de diodes sont respectivement appliqués aux entrées des mémoires tampons 48 et 60, et mis en mémoire par la commande du signal délivré à la sortie de la bascule 41. Ces deux signaux, du fait que le pneumatique occulte une partie des faisceaux 22 et 23 (Figure 1B) sont respectivement fonction des longueurs $1_1$ et $1_2$ représentant respectivement la longueur de la corde du pneumatique située dans le plan 24, à la distance $h_1$ du sol 3, et une image de la longueur de la corde située dans le plan 30, à la distance $h_2$ du sol 3.

Le signal mis en mémoire dans la mémoire tampon 60 est appliqué à l'entrée 63 du diviseur par deux 64 qui délivre alors à sa sortie 65 un signal qui est représentatif de la demi-corde $1_2$ et qui permet de délivrer sur cette sortie 65 un signal définissant la position origine des cordes par rapport à un plan 80 passant par l'axe de rotation 81 du pneumatique. Cette valeur représente donc la distance séparant le plan 82 passant par le détecteur 32 et perpendiculaire au sol 3, et le plan 80. Ce signal délivré à la sortie 65 est appliqué à l'entrée 66 du soustracteur 52, permettant ainsi d'obtenir en sortie 53 un signal qui représente la valeur de la différence $1_2 - 1/2.1_1$, c'est-à-dire la valeur de la demi-corde $L_2$ mesurée dans le plan 30 à une hauteur $h_2$ et passant par la barrette 37. Par contre, le signal obtenu à la sortie 65 et représentant la demi-corde à la hauteur $h_1$ est appliqué à l'entrée 67 du calculateur 68 qui reçoit sur les autres entrées 69 différentes valeurs dont les deux valeurs $h_1$ et $h_2$ qui sont connues par construction. Le calculateur délivre à sa sortie 70 un signal représentatif de la valeur théorique $L_c$ d'une demi-corde à la distance $h_2$ du sol 3. Le calcul, connaissant les valeurs $h_1$, $h_2$ et $1/2.1_1$, donne

$$ L_c = \sqrt{ \frac{1_1^2}{4} \cdot \frac{h_2}{h_1} + h_2 \, (h_1 - h_2) } $$

Cette valeur théorique obtenue à la sortie 70 est appliquée à l'entrée 71 du comparateur 55 qui reçoit sur l'autre entrée 54 la valeur mesurée $L_2$. Suivant que les deux valeurs $L_c$ et $L_2$ sont, ou ne sont pas, identiques (ou sensiblement identiques), le comparateur délivre à sa sortie 72 un signal à deux états, dit "d'alarme" qui peut être visualisé sur l'afficheur 74.

En effet, si les deux valeurs $L_c$ et $L_2$ ne sont pas égales, ou sensiblement égales, ceci indique le fait que le pneumatique n'a pas une enveloppe sensiblement cylindrique, ou une déformation normale définie par le constructeur. La longueur $L_2$ étant plus grande que $L_c$ veut dire que la pression dans le pneumatique est trop faible. Pour donner une image représentative de la valeur du sousgonflage, on peut étalonner la différence $L_2 - L_c$. Ceci permet d'avertir l'utilisateur du véhicule comportant ce pneumatique que la pression de gonflage n'est pas correcte et qu'il y a danger à rouler avec un tel pneumatique.

Dans ce qui vient d'être décrit ci-dessus, la vérification a été faite pour une seule roue. Mais il est évident qu'un véhicule automobile comporte, dans la majorité des cas, quatre roues.

Il est ainsi important de vérifier les quatre pneumatiques. De plus, pour cette vérification, il est intéressant de n'utiliser qu'un seul dispositif de mesure. La Figure 3 représente une mise en oeuvre d'un dispositif selon l'invention permettant d'effectuer l'analyse des quatre penumatiques 90, 91, 92 et 93 d'un véhicule automobile. Comme deux roues sont, généralement, sur un même axe perpendiculaire à l'axe de propagation du véhicule, il est impossible de positionner le générateur laser et les décomposeurs de faisceaux, d'un côté du véhicule, et les récepteurs photosensibles de l'autre côté, avec des faisceaux perpendiculaires à l'axe de propagation. Pour pouvoir réaliser cette configuration, les directions des faisceaux 94, 95 et 96 correspondant respectivement aux trois faisceaux 21, 22 et 23, forment un angle oblique avec l'axe de propagation 97 du véhicule, de façon que les faisceaux ne puissent être occultés que par une seule roue à la fois, comme représenté sur la Figure 3. Dans ces conditions, quand le véhicule en mouvement passera dans le chemin des faisceaux 94, 95 et 96, les roues seront alors analysées dans l'ordre suivant : 92, 93, 90 et 91. A titre illustratif, il a été représenté en pointillés en 90' et 91' la position des roues 90 et 91 pour l'analyse de la roue 91 après celle de la roue 90 comme représenté.

Cette solution comme représentée sur la Figure 3 donne satisfaction, surtout quand l'épaisseur des pneumatiques n'est pas trop grande, en négligeant les erreurs dues au parallaxe.

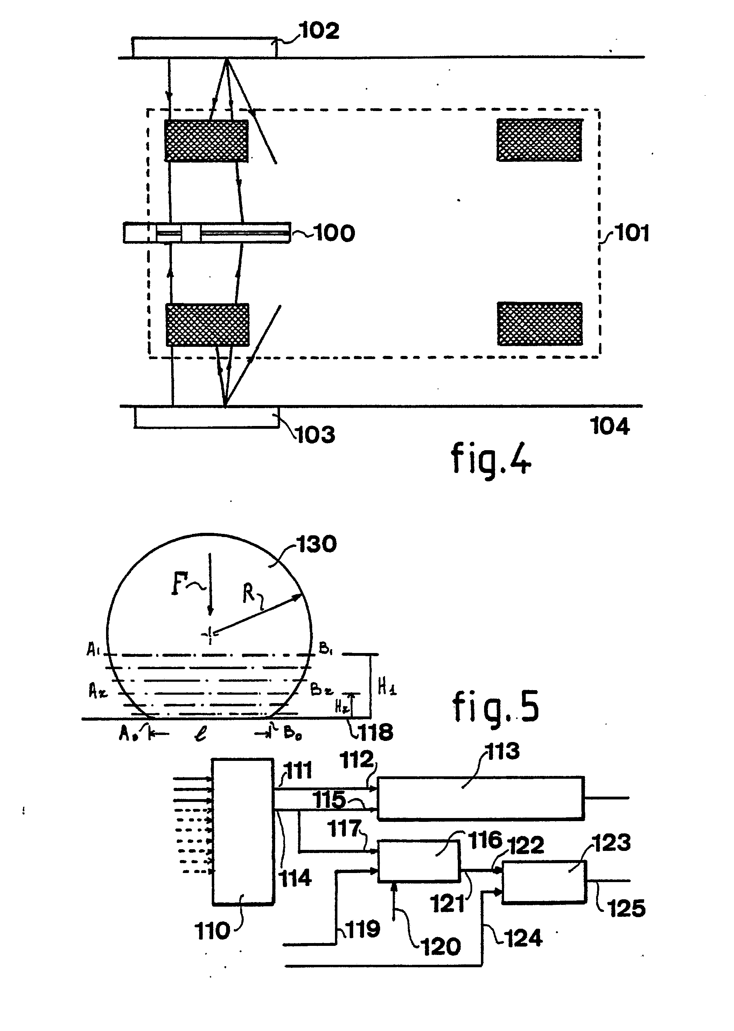

Hors, dans la plupart des cas, on ne peut pas connaître cette erreur de parallaxe, à cause de la diversité des pneumatiques. Pour pallier cet inconvénient, on réalise un ensemble de deux dispositifs selon l'invention et on place, par exemple, les détecteurs au milieu 100 du chemin de roulement 104 du véhicule 101, avec deux générateurs 102 et 103 de faisceaux lumineux de part et d'autre du chemin de roulement 104, comme illustré sur la Figure 4. Cependant, l'ensemble peut être ainsi agencé : avec le générateur laser au milieu 100 du chemin de roulement 104, les barrettes de cellules photosensibles et la cellule de détection de chaque côté du chemin de roulement 104.

On a vu ci-dessus qu'il était possible d'évaluer la déformation des pneumatiques.

Le dispositif illustré sur la Figure 5 représente un mode de réalisation d'un dispositif d'application à la détermination de l'intensité de la force à laquelle est soumis le pneumatique, pour déterminer, par exemple, le poids du véhicule en intégrant l'ensemble des forces qui s'exercent sur tous les pneumatiques du véhicule.

Pour cela, le dispositif comporte une pluralité de barrettes de cellules photosensibles disposées respectivement à des distances $h_1$, $h_2$, ..., $h_x$ du sol.

Comme dans le dispositif illustré sur la Figure 1, on mesure une pluralité de cordes :

$$ A_1B_1, \ A_2B_2, ..., \ A_xB_x. $$

Ces mesures sont mémorisées dans la mémoire tampon 110 qui comporte, en plus, la valeur du rayon R du pneumatique délivrable sous forme d'un signal à la sortie 111 et introduit par l'entrée 112 dans le calculateur 113. La sortie 114 de la mémoire tampon 110 est apte à délivrer le signal correspondant successivement aux différentes valeurs de cordes mesurées à l'aide des barrettes de cellules photosensibles. Le signal est alors appliqué à l'entrée 115 du calculateur 113. Le calculateur est apte à effectuer un calcul donné par la formule : .

$$D_x = 2\sqrt{2h_x R - h_x^2} - A_x B_x$$

Le résultat de ce calcul représente la différence entre la valeur de la corde calculée et la valeur de la corde mesurée. $D_x$ est donc une grandeur représentative de la déformation du pneumatique.

De plus, le dispositif comporte un multiplicateur 116 qui reçoit, sur une entrée 117, la valeur de la mesure de la corde du pnematique en contact avec le sol 118, c'est-à-dire la corde $A_0 B_0$ ($1_0$). L'entrée 119, elle, est apte à recevoir un signal représentatif de la valeur de la largeur $L_0$ du pneumatique, tandis que l'entrée 120 est apte à recevoir un signal représentatif K d'un facteur de force. Le multiplicateur est apte à délivrer à sa sortie 121 un signal dont la valeur est représentative du produit

$$L_0 . 1_0 . K = S_0.$$

Le signal $S_0$ est alors appliqué à une entrée 122 d'un deuxième multiplicateur 123 qui reçoit sur sa deuxième entrée 124 un signal représentatif de la pression P régnant à l'intérieur du pneumatique et qui a pu être évaluée à l'aide du dispositif dont un mode de réalisation est illustré sur les Figures 1 et 2. De ce fait, la sortie 125 du multiplicateur 123 délivre un signal qui est égal au produit $P.S_0$ qui est l'intensité de la force F d'appui qui s'applique sur le pneumatique 130, Figure 5.

Les modes de réalisation du dispositif selon l'invention donnent de très bons résultats pour des applications habituelles de l'évaluation de la déformation des pneumatiques, notamment de véhicules automobiles, car il est nécessaire, dans ce cas, d'effectuer une évaluation en tout ou rien et avec des différences de seuil relativement importantes.

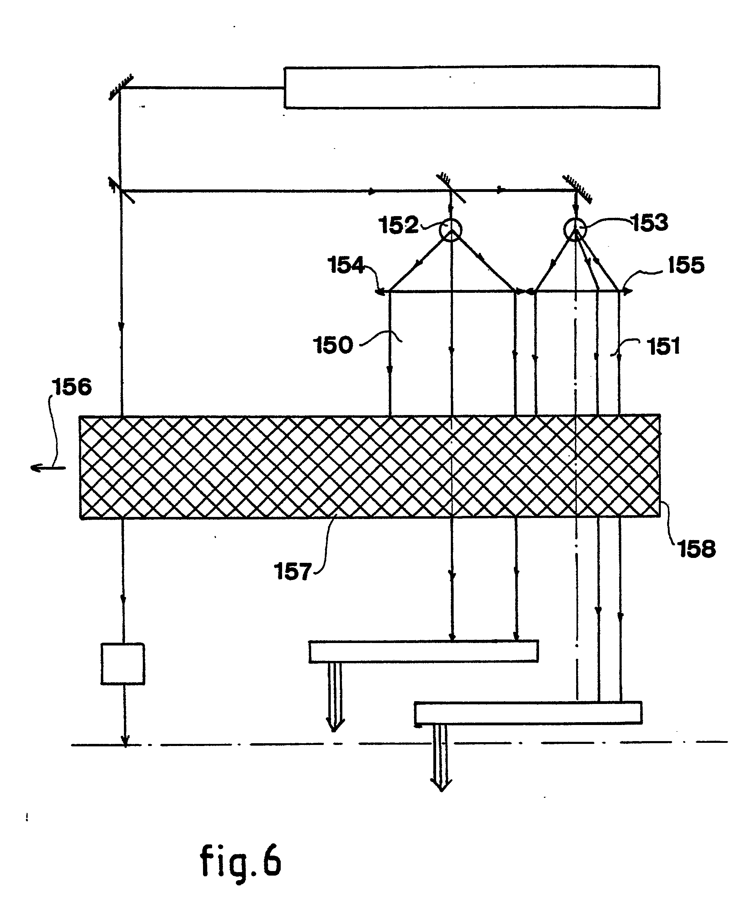

Par contre, quand on veut obtenir plus de précision et éliminer le maximum d'erreurs dues au parallaxe, on réalise un dispositif dans lequel les deuxième et troisième faisceaux sont constitués, non par des faisceaux divergents comme représenté sur la Figure 1B, mais par des faisceaux plats à rayons parallèles comme représenté sur la Figure 6. Ces deux faisceaux plats 150 et 151 sont obtenus, par exemple, au moyen de la combinaison d'un système afocal constitué par exemple d'une première lentille cylindrique 152, 153 associée, sur un même axe optique, à une lentille convergente 154, 155 dont le plan focal est confondu avec le centre optique de la lentille cylindrique. Dans ce cas, le premier faisceau est alors avantageusement perpendiculaire à l'axe de propagation 156 du pneumatique 157, de même que pour les faisceaux 150 et 151. De ce fait, les faisceaux qui seront occultés et qui passeront vers les détecteurs ou barrettes de cellules sont tous parallèles, et surtout sont sensiblement parallèles au bord de la bande de roulement 158 du pneumatique. Les points de tangence des faisceaux coopérant avec le pneumatique sont alors tous dans un même plan qui est parallèle à l'axe 156 de propagation de celui-ci, éliminant par là même les erreurs de parallaxe pour donner une mesure plus précise.

## Revendications

1. Dispositif pour évaluer la déformation des pneumatiques de véhicules quand ils roulent sur le sol, CARACTERISE PAR LE FAIT QU'il comporte :
- des moyens (32, 34, ...) pour mesurer une première corde desdits pneumatiques, ladite première corde étant suivant une première direction distante d'une première distance ($h_1$) dudit sol (3),
- des moyens (68) pour calculer une longueur théorique d'une seconde corde dudit pneumatique, à une seconde distance ($h_2$) du sol (3), en fonction de la valeur de ladite première corde et de ladite première distance au sol,
- des moyens (32, 37, ...) pour mesurer la valeur de ladite seconde corde dudit pneumatique située à ladite seconde distance du sol, et
- des moyens pour comparer (55) la longueur théorique de ladite seconde corde et la valeur mesurée de ladite seconde corde, et pour élaborer (72) un signal d'information représentatif de ladite comparaison.

2. Dispositif selon la revendication 1, CARACTERISE PAR LE FAIT QUE lesdits moyens pour mesurer une première corde desdits pneumatiques comportent :
- une première source de faisceau lumineux (10) apte à émettre au moins deux faisceaux sensiblement parallèles (21, 22), un premier faisceau (21) associé, à une distance déterminée, à un deuxième faisceau plan relativement large (22), les deux distances séparant respectivement le premier faisceau des deux bords extrêmes dudit deuxième faisceau étant respectivement inférieure et supérieure à la valeur desdites premières cordes à mesurer, les deux dits faisceaux étant disposés à une première distance ($h_1$) déterminée par rapport au sol sur lequel est apte à rouler ledit pneumatique,
- des premiers détecteurs photosensibles (32, 34) disposés sur le trajet, respectivement des deux dits faisceaux (21, 22), aptes à délivrer des signaux représentatifs de la quantité de lumière reçue, et
- des premiers moyens (60, 64) pour élaborer un signal représentatif de la valeur de ladite première corde en fonction des signaux élaborés par lesdits premiers détecteurs photosensibles.

3. Dispositifs selon l'une des revendications 1 ou 2, CARACTERISE PAR LE FAIT QUE les moyens pour mesurer la valeur de ladite seconde corde dudit pneumatique située à ladite seconde distance du sol comportent :
- une seconde source (10, 11, ...) de faisceaux lumineux apte à émettre au moins un troisième faisceau (23) plat et large, sensiblement parallèle audit second faisceau (22) et audit sol (3), la distance séparant un point origine déterminable en dehors du faisceau des deux bords dudit troisième faisceau étant respectivement inférieure et supérieure à la valeur présumée des cordes à mesurer, ledit troisième faisceau (23) étant situé à une deuxième distance ($h_2$) déterminée par rapport au sol (3),
- des seconds détecteurs photosensibles (37) aptes à délivrer des signaux représentatifs de la quantité de lumière reçue, et
- des seconds moyens (48, 52) pour élaborer un signal représentatif de la valeur de ladite seconde corde en fonction des signaux élaborés par lesdits seconds détecteurs photosensibles (37).

4. Dispositif selon la revendication 1, CARACTERISE PAR LE FAIT QUE lesdits premiers moyens pour élaborer un signal comportent un calculateur (68) apte à effectuer le calcul de la valeur théorique $L_c$ de la moitié de ladite seconde corde, suivant la formule suivante :

$$L_c = \sqrt{\frac{l_1^{\,2}}{4} \cdot \frac{h_2}{h_1} + h_2\,(h_1 - h_2)}$$

formule dans laquelle $h_1$ et $h_2$ représentent respectivement les valeurs desdites deux première et seconde distances par rapport au sol, et $l_1$ représente la valeur de ladite première corde mesurée.

5. Dispositif selon l'une des revendications 2 et 3, CARACTERISE PAR LE FAIT QUE les directions desdits premier, deuxième et troisième faisceaux (21, 22, 23) sont parallèles entre elles et font avec l'axe de déplacement dudit pneumatique un angle déterminé.

6. Dispositif selon la revendication 5, CARACATERISE PAR LE FAIT QUE la valeur dudit angle déterminé est égale à celle d'un angle droit.

7. Dispositif selon l'une des revendications 2 ou 3, CARACTERISE PAR LE FAIT QUE ladite première source ou ladite seconde source pour délivrer lesdits deuxième ou troisième faisceaux comporte au moins une lentille cylindrique (152, 153).

8. Dispositif selon la revendication 7, CARACTERISE PAR LE FAIT QUE ladite source comporte, en outre, une lentille convergente (154, 155) dont le point focal est confondu avec le point de divergence de ladite lentille cylindrique.

9. Dispositif selon la revendication 5, CARACTERISE PAR LE FAIT QUE, dans le cas d'une application à la vérification du gonflage des pneumatiques d'un véhicule à plusieurs roues (90-93), la valeur dudit angle déterminé est égale à celle d'un angle défini de façon que les faisceaux puissent passer directement entre lesdites roues.

10. Dispositif selon l'une des revendications précédentes, CARACTERISE PAR LE FAIT QU'à titre d'application, il comporte des moyens (110) pour déterminer la pression dans ledit pneumatique (130) en fonction de sa déformation, et des moyens pour déterminer la force d'appui (F) dudit pneumatique en fonction de ladite pression dans ledit pneumatique.

**Claims**

1. Device for evaluating the deformation of vehicle tires running along the ground, characterized by the fact that it comprises:
   — means (32, 34, ...) for measuring the length of a first chord of said tires, said first chord extending along a first direction at a first distance ($h_1$) from said ground (3),
   — means (68) for calculating a theoretical length for a second chord of said tire locted at a second distance ($h_2$) from the ground (3), as a function of the length of said first chord and of said first distance from the ground,
   — means (32, 37, ...) for measuring the length of said second chord of said tire situated at said second distance from the ground, and
   — means for comparing (55) the theoretical length of said second chord with the measured length of said second chord, and for generating (72) an output signal representative of said comparison.

2. Device according to claim 1, characterized by the fact that the means for measuring the length of the first chord of said tires comprise:
   — a first light beam source (10) suitable for emitting at least two substantially parallel beams (21, 22), namely a fist beam (21) and an associated second beam (22) which are at a predetermined distance apart, said second beam being a relatively wide plane beam and the two distances between the first beam and the edges of said second beam being respectively less than and greater than the lengths of said first chords to be measured, both of said beams being disposed at a first predetermined height ($h_1$) above the ground over which said tire runs,
– first light sensitive detectors (32, 34) disposed on the paths respectively of said two light beams (21, 22) and suitable for delivering signals representative of the quantity of light received, and
– first means (60, 64) for generating a signal representative of the length of said first chord as a function of the signals generated by said first light sensitive detectors.

3. Device according to one of the claims 1 and 2, characterized by the fact that means for measuring the length of said second tire chord situated at said second height above the ground comprise:
– a second light beam source (10, 11, ...) suitable for emitting at least one third wide and flat beam (23) substantially parallel to said second beam (22) and to said ground (3), the distance between a determinable origin point outside the beam and the two edges of said third beam being respectively less than and greater than the expected lengths of the chords to be measured, said third beam (23) being situated at said second predetermined height ($h_2$) above the ground (3),
– second light sensitive detectors (37) suitable for delivering signals representative of the quantity of light received, and
– second means (48, 52) for generating a signal representative of the length of said second chord as a function of the signals generated by said second light sensitive detectors (37).

4. Device according to claim 1, characterized by the fact that said first means for generating a signal include a calculator (68) suitable for calculating the theoretical length $L_c$ of one-half of said second chord using the following equation:

$$L_c = \sqrt{\frac{l_1^2}{4} \cdot \frac{h_2}{h_1} + h_2\,(h_1 - h_2)}$$

where $h_1$ and $h_2$ are respectively said first and second heights above the ground, and where $l_1$ is the measured length of said first chord.

5. Device according to one of claims 2 and 3, characterized by the fact that the directions of said first, second and third beams (21, 22, 23) are mutually parallel and extend at a predetermined angle to the direction of tire displacement.

6. Device according to claim 5, characterized by the fact that said predetermined angle is a right angle.

7. Device according to one of claims 2 and 3, characterized by the fact that said first and second sources for delivering said second and third beams include at least one cylindrical lens (152, 153).

8. Device according to claim 7, characterized by the fact that said source additionally includes a converging lens (154, 155) whose focus is located at the point of divergence of said cylindrical lens.

9. Device according to claim 5, characterized by the fact that, when it is applied for checking the pressure in the tires of a multi-wheel (90–93) vehicle, said predetermined angle is determined in such a manner as to enable the light beams to pass directly between said wheels.

10. Device according to any one of previous claims, characterized by the fact that, in an application, it comprises means (110 for determining the pressure in said tire (130) as a function of its deformation, and means for determining the force (F) with which said tire is pressed against the ground as a function of said pressure in said tire.

**Patentansprüche**

1. Vorrichtung zum Bewerten der Deformation der Reifen von auf dem Boden rollenden Fahrzeugen, dadurch gekennzeichnet, daß sie umfaßt:
– Mittel (32, 34, ...) zum Messen einer ersten Sehne der Reifen, welche erste Sehne in einer ersten Richtung in einem ersten Abstand ($h_1$) vom Boden (3) verläuft,
– Mittel (68) zum Berechnen einer theoretischen Länge einer zweiten Sehne des Reifens in einem zweiten Abstand ($h_2$) vom Boden (3) in Funktion des Wertes der ersten Sehne und des ersten Abstands vom Boden,
– Mittel (32, 37, ...) zum Messen des Wertes der zweiten Sehne des Reifens in dem zweiten Abstand vom Boden, und
– Mittel (55) zum Vergleichen der theoretischen Länge der zweiten Sehne und des gemessenen Wertes der zweiten Sehne und zum Erzeugen eines für den Vergleich repräsentativen Informationssignals.

2. Vorrichtung nach Anspruch 1, dadurch gekennzeichnet, daß die Mittel zum Messen der ersten Sehne der Reifen umfassen:

– eine erste Lichtstrahlenquelle (10), ausgebildet zum Emittieren mindestens zweier im wesentlichen paralleler Strahlen (21, 22), wobei ein erster Strahl (21) mit einer vorbestimmten Distanz einem zweiten ebenen relativ breiten Strahl (22) zugeordnet ist, wobei die beiden Distanzen zwischen dem ersten Strahl und den beiden Außenkanten des zweiten Strahls kleiner bzw. größer sind als der Wert der zu messenden ersten Sehnen, und wobei die beiden Strahlen in einem ersten vorbestimmten Abstand ($h_1$) von dem Boden angeordnet sind, auf dem der Reifen abrollbar ist,
– erste photoempfindliche Detektoren (32, 34), angeordnet im Strahlengang jeweils eines der beiden Strahlen (21, 22) und ausgebildet zum Erzeugen von für die Quantität des empfangenen Lichts repräsentativen Signalen, und
– erste Mittel (60, 64) zum Ableiten eines für den Wert der ersten Sehne repräsentativen Signals in Abhängigkeit von den von den ersten photoempfindlichen Detektoren erzeugten Signalen.

3. Vorrichtung nach einem der Ansprüche 1 oder 2, dadurch gekennzeichnet, daß die Mittel zum Messen des Wertes der zweiten Sehne des Reifens im zweiten Abstand vom Boden umfassen:
– eine zweite Lichtstrahlenquelle zum Emittieren mindestens eines dritten, flachen und breiten Strahls (23) im wesentlichen parallel zum zweiten Strahl (22) und zum Boden (3), wobei die Distanz zwischen einem bestimmbaren Ursprungspunkt außerhalb des Strahls und den beiden Rändern des dritten Strahls kleiner bzw. größer ist als der vorangenommene Wert der zu messenden Sehnen und wobei der dritte Strahl (23) in einem zweiten vorbestimmten Abstand ($h_2$) bezüglich des Bodens (3) angeordnet ist,
– zweite photoempfindliche Detektoren (37) zum Erzeugen von für die Quantität des empfangenen Lichts repräsentativen Signalen, und
– zweite Mittel (48, 52) zum Ableiten eines für den Wert der zweiten Sehne repräsentativen Signals in Abhängigkeit von den von den zweiten photoempfindlichen Detektoren (37) erzeugten Signalen.

4. Vorrichtung nach Anspruch 1, dadurch gekennzeichnet, daß die ersten Mittel zum Erzeugen eines Signals einen Rechner (68) umfassen zum Durchführen der Berechnung des theoretischen Wertes $L_c$ der Hälfte der zweiten Sehne gemäß nachstehender Formel:

$$L_c = \sqrt{\frac{l_1^{\,2}}{4} \cdot \frac{h_2}{h_1} + h_2\,(h_1 - h_2)}$$

in welcher $h_1$ bzw. $h_2$ die Werte des ersten bzw. zweiten Abstands bezügich des Bodens und $l_1$ den Wert der ersten gemessenen Sehne repräsentieren.

5. Vorrichtung nach einem der Ansprüche 2 und 3, dadurch gekennzeichnet, daß die Richtungen des ersten, zweiten und dritten Strahls (21, 22, 23) untereinander parallel sind und unter einem vorbestimmten Winkel bezüglich der Bewegungsrichtung des Reifens verlaufen.

6. Vorrichtung nach Anspruch 5, dadurch gekennzeichnet, daß der Wert des vorbestmmten Winkels gleich dem eines rechten Winkels ist.

7. Vorrichtung nach einem der Ansprüche 2 oder 3, dadurch gekennzeichnet, daß die erste Quelle oder die zweite Quelle für die Erzeugung des zweiten oder dritten Strahls mindestens eine Zylinderlinse (152, 153) umfassen.

8. Vorrichtung nach Anspruch 7, dadurch gekennzeichnet, daß die Quelle ferner eine konvergierende Linse (154, 155) umfaßt, deren Brennpunkt mit dem Divergenzpunkt der Zylinderlinse zusammenfällt.

9. Vorrichtung nach Anspruch 5, dadurch gekennzeichnet, daß im Falle der Verwendung für die Verifikation des Reifendrucks eines Fahrzeugs mit mehreren Rädern (90–93) der Wert des vorbestimmten Winkels gleich dem eines Winkels ist, der so definiert wird, daß die Strahlen direkt zwischen den Rädern verlaufen können.

10. Vorrichtung nach einem der vorangehenden Ansprüche, dadurch gekennzeichnet, daß sie beim Einsatz Mittel (110) umfaßt zum Bestimmen des Drucks in dem Reifen (130) in Abhängigkeit von seiner Deformation sowie Mittel zum Bestimmen der Aufstandskraft (F) des Reifens in Abhängigkeit von dem Druck im Reifen.

fig.1A

fig.1B

fig.2

fig.3

fig.4

fig.5

fig.6